# EUROPÄISCHE PATENTANMELDUNG

(11) **EP 4 258 518 A1**
(43) Veröffentlichungstag der Anmeldung: **11.10.2023**
(21) Anmeldenummer: 22166933.6
(22) Anmeldetag: 06.04.2022
(51) Int. Cl.: H02K 1/02, H02K 1/14, H02K 15/02

(54) **STATOR FÜR EINE ROTIERENDE ELEKTRISCHE MASCHINE**

(71) Anmelder: Siemens Aktiengesellschaft, 80333 München (DE)
(72) Erfinder: Mutzbauer, Frank, 97618 Hollstadt (DE); Vollmer, Rolf, 36129 Gersfeld (DE)
(74) Vertreter: Siemens Patent Attorneys

(57) **Zusammenfassung**

Ein Stator (12) für eine elektrische rotierende Maschine (26) mit geringeren Kosten und verbesserter Ökobilanz, wird mit folgenden Herstellungsschritten gefertigt: -Stapeln erster Materiallagen (4) aus einem ersten metallischen Werkstoff zu einer Zahnanordnung (2). Diese umfasst eine Mehrzahl radial ausgerichteter Zähne (16) und einen die Zähne (16) verbindenden Innenring (18). - Stapeln zweiter Materiallagen (20) aus einem zweiten metallischen Werkstoff zu einem Joch (14). Dabei weist der erste Werkstoff eine höhere Sättigungsinduktion auf als der zweite Werkstoff. - Fügen des Jochs (14) mit der Zahnanordnung (2) zu einem Materiallagengefüge (22). - Entfernen des Innenrings (18). Die ersten Materiallagen (4) weisen jeweils eine erste Dicke (d1) im Bereich von 10 µm bis 250 µm auf und wurden jeweils aus einem Grünkörper mittels eines Sinterverfahrens hergestellt.

## Beschreibung

Die Erfindung betrifft ein Verfahren zum Herstellen eines Stators für eine elektrische rotierende Maschine.

Ferner betrifft die Erfindung einen Stator für eine elektrische rotierende Maschine.

Darüber hinaus betrifft die Erfindung eine elektrische rotierende Maschine mit mindestens einem derartigen Stator.

In elektrischen rotierenden Maschinen, welche beispielsweise als Motor und/oder als Generator betreibbar sind, kommen üblicherweise Blechpakete aus gestapelten Elektroblechen zum Einsatz, um eine Ausbreitung von Wirbelströmen zu unterdrücken. Derartige elektrische rotierende Maschinen sind beispielsweise Motoren und Generatoren. Die Elektrobleche, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Durch ein derartiges konventionelles Herstellungsverfahren sind derzeit großtechnisch keine Bleche herstellbar, die eine Lagendicke von kleiner 100 µm aufweisen. Zudem fällt beim Herausschneiden bzw. Stanzen der Bleche aus den Großblechen Abfall an.

Die Patentschrift DE 10 2007 024 822 B3 beschreibt ein Verfahren zum Zusammenbau eines Stators für eine elektrische Maschine.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Die Offenlegungsschrift DE 10 2019 206 509 A1 beschreibt einen Stator für einen Elektromotor, bei dem der Stator aus einem ringförmigen Statorjoch und einer Mehrzahl radial ausgerichteten Statorzähnen gefügt ist, wobei das Statorjoch aus einem Jochmaterial mit einer geringeren magnetischen Permeabilität besteht als ein Zahnmaterial der Statorzähne, wobei die Statorzähne an Fügestellen mit dem Statorjoch verbunden sind.

Vor diesem Hintergrund liegt der Erfindung die Aufgabe zugrunde, die Herstellung eines Materiallagengefüges für eine elektrische rotierende Maschine zu verbessern.

Vor diesem Hintergrund liegt der Erfindung die Aufgabe zugrunde, ein Verfahren zum Herstellen eines Stators für eine elektrische rotierende Maschine, welches kostengünstig ist und eine verbesserte Ökobilanz ermöglicht.

Diese Aufgabe wird erfindungsgemäß gelöst durch ein Verfahren zur Herstellung eines Stators für eine elektrische rotierende Maschine umfassend folgende Schritte: Stapeln erster Materiallagen, welche aus einem ersten metallischen Werkstoff hergestellt werden, zu einer Zahnanordnung, welche einer Mehrzahl radial ausgerichteter Zähne und einen Innenring, welcher die Zähne verbindet, umfasst, Stapeln zweiter Materiallagen, welche aus einem zweiten metallischen Werkstoff hergestellt werden, zu einem Joch, wobei der erste metallische Werkstoff eine höhere Sättigungsinduktion aufweist als der zweite metallischen Werkstoff, Fügen des Jochs mit der Zahnanordnung zu einem Materiallagengefüge, Entfernen des Innenrings, wobei die ersten Materiallagen jeweils eine erste Dicke im Bereich von 10 µm bis 250 µm, insbesondere im Bereich von 10 µm bis 100 µm, aufweisen und jeweils aus einem Grünkörper mittels eines, insbesondere drucklosen, Sinterverfahrens hergestellt werden.

Ferner wird die Aufgabe erfindungsgemäß gelöst durch einen Stator für eine elektrische rotierende Maschine umfassend eine Zahnanordnung, welche eine Mehrzahl radial ausgerichteter Zähne aufweist und welche aus gestapelten ersten Materiallagen aus einem ersten metallischen Werkstoff hergestellt ist, ein Joch, welches aus gestapelten zweiten Materiallagen aus einem zweiten metallischen Werkstoff hergestellt ist, wobei der erste metallische Werkstoff eine höherer Sättigungsinduktion aufweist als der zweite metallischen Werkstoff, wobei das Joch mit der Zahnanordnung zu einem Materiallagengefüge gefügt ist, wobei die ersten Materiallagen jeweils eine erste Dicke im Bereich von 10 µm bis 250 µm, insbesondere im Bereich von 10 µm bis 100 µm, aufweisen und jeweils aus einem Grünkörper mittels eines, insbesondere drucklosen, Sinterverfahrens hergestellt sind.

Darüber hinaus wird die Aufgabe erfindungsgemäß gelöst durch eine elektrische rotierende Maschine mit mindestens einem derartigen Stator.

Die in Bezug auf das Verfahren nachstehend angeführten Vorteile und bevorzugten Ausgestaltungen lassen sich sinngemäß auf den Stator und die elektrische rotierende Maschine übertragen.

Der Erfindung liegt die Überlegung zugrunde, ein Verfahren zur Herstellung eines Stators für eine elektrische rotierende Maschine mit einem Joch und einer Zahnanordnung anzugeben, welches die Verwendung verschiedener Materialien und Herstellungsmethoden für die Materiallagen des Jochs und der Zahnanordnung ermöglicht. Bei der Herstellung des Stators werden erste Materiallagen aus einem ersten metallischen Werkstoff zur Zahnanordnung, welche eine Mehrzahl radial ausgerichteter Zähne und einen Innenringumfasst, und zweite Materiallagen aus einem zweiten metallischen Werkstoff zum Joch gestapelt.

Das Stapeln der Materiallagen kann unter anderem ein Pressen und Verkleben der Materiallagen zum Erhalten des Jochs bzw. der Zahnanordnung beinhalten. Der erste metallische Werkstoff weist eine höhere Sättigungsinduktion, auch Sättigungsflussdichte genannt, als der zweite metallischen Werkstoff auf. Insbesondere ist die Sättigungsinduktion des ersten metallischen Werkstoffs kleiner als 2,2 T, während die Sättigungsinduktion des zweiten metallischen Werkstoffs mindestens 2,25 T beträgt. Beispielsweise wird für das Joch eine Nickel-EisenLegierung mit einer Sättigungsinduktion im Bereich von 1,2 T bis 1,5 T verwendet, während für die Zahnanordnung eine Eisen-Kobalt-Legierung mit einer Sättigungsinduktion im Bereich von 2,25 bis 2,35 T zum Einsatz kommt. Eine Nickel-EisenLegierung zeichnet sich durch eine geringe Verlustziffer aus, während die Eisen-Kobalt-Legierung eine hohe Sättigungsflussdichte aufweist. Die Zähne der Zahnanordnung sind während des Betriebes des Stators magnetisch stärker belastet als das Joch, das den magnetischen Fluss von Zahn zu Zahn leitet, sodass im Joch eine kostengünstigere Legierung mit geringerer Sättigungsflussdichte eingesetzt werden kann. Durch eine höhere Sättigungsinduktion wird ein Materiallagendesign mit schmäleren Zähnen und daher größeren Nuten zur Aufnahme von Magnetspulen ermöglicht, wodurch sich ein Drehmoment und eine Leistung der elektrischen rotierenden Maschinen erhöht. Ebenso werden höhere Wirkungsgrade erreicht, was neben der Kosteneinsparungen im Betrieb auch zu einem geringeren CO2-Ausstoß und damit zu einer verbesserten Ökobilanz führt.

In weiteren Schritten wird das Joch mit der Zahnanordnung zu einem Materiallagengefüge gefügt und der Innenring wird entfernt. Das Fügen kann z.B. durch Formschluss, unter anderem durch Verklemmen, aber auch durch eine stoffschlüssige Verbindung, unter anderem durch Schweißen oder Kleben, zwischen Joch und Zähnen erfolgen.

Zumindest die ersten Materiallagen der Zahnanordnung werden jeweils aus einem Grünkörper mittels eines, insbesondere drucklosen, Sinterverfahrens hergestellt. Die Herstellung des Grünkörpers kann mittels eines additiven Verfahrens erfolgen. Derartige additive Verfahren sind unter anderem Siebdruck, Schablonendruck und Rollendruck. Die durch das Sinterverfahren hergestellten ersten Materiallagen weisen jeweils eine erste Dicke im Bereich von 10 µm bis 250 µm, insbesondere im Bereich von 10 µm bis 100 µm, auf. Durch derartig geringe Lagendicken werden Wirbelstromverluste deutlich reduziert, wodurch ein höherer Wirkungsgrad erreicht wird. Durch den Einsatz derartiger gedruckter und gesinterter Materiallagen, wird Abfall vermieden, was die Ökobilanz zusätzlich verbessert und zu einer Kosteneinsparung führt.

Eine weitere Ausführungsform sieht vor, dass die zweiten Materiallagen jeweils mit einer zweiten Dicke, welche größer als die erste Dicke der ersten Materiallagen ist, hergestellt werden. Beispielsweise weisen die ersten Materiallagen eine Dicke von 20 µm auf, während die zweiten Materiallagen eine Dicke von 100 µm aufweisen. Durch ein derartiges Stator-Design werden in den magnetisch stark belasteten Zähnen Wirbelstromverluste deutlich reduziert und gleichzeitig durch die geringere Anzahl von Lagen im Joch Kosten eingespart.

Eine weitere Ausführungsform sieht vor, dass die zweiten Materiallagen als Elektrobleche ausgeführt sind, welche durch ein Stanzverfahren oder ein Laserschneidverfahren hergestellt werden. Insbesondere wird das magnetisch weniger belastete Joch durch ein Stanzpaketierverfahren hergestellt, was zu einer Kosteneinsparung führt.

Eine weitere Ausführungsform sieht vor, dass die zweiten Materiallagen aus einem Grünkörper mittels eines, insbesondere drucklosen, Sinterverfahrens hergestellt werden. Die Herstellung des Grünkörpers für die zweiten Materiallagen kann ebenfalls mittels eines additiven Verfahrens wie Siebdruck, Schablonendruck und Rollendruck erfolgen. Die durch das Sinterverfahren werden geringe Lagendicken ermöglicht, was Wirbelstromverluste deutlich reduziert, wodurch ein höherer Wirkungsgrad erreicht wird. Ferner wird Abfall vermieden, was sich positiv auf die Ökobilanz auswirkt.

Eine weitere Ausführungsform sieht vor, dass der Grünkörper zur Herstellung der ersten Materiallagen und/oder der zweiten Materiallagen aus einer Suspension, welche Legierungsfestteilchen, insbesondere pulverförmige, Sinterhilfsmittel und zumindest einen Binder umfasst, hergestellt wird, wobei mittels der, insbesondere pulverförmigen, Sinterhilfsmittel Eutektika ausgebildet werden. Die Sinterhilfsmittel bilden mit den zu sinternden Legierungen Eutektika aus, wodurch Lunker und Poren weitgehend vermieden werden, sodass, insbesondere bei einem drucklosen Sinterprozess, eine hohe Dichte erreicht wird.

Eine weitere Ausführungsform sieht vor, dass für den Grünkörper der ersten Materiallagen Legierungsfestteilchen verwendet werden, die Eisen und Kobalt enthalten und wobei die zweiten Materiallagen aus Reineisen oder einer Eisenlegierung mit einer Sättigungsinduktionen von weniger als 2,2 T hergestellt werden. Durch den Einsatz von ersten Materiallagen aus einer Eisen-Kobalt-Legierung, welche beispielsweise Kobalt mit einem Gewichtsanteil im Bereich von 47 % bis 50 % enthält, können die Zähnen zur Leitung des magnetischen Flusses verkleinert werden, um größere Nuten zur Aufnahme von Magnetspulen zu ermöglichen, wodurch sich ein Drehmoment und eine Leistung der elektrischen rotierenden Maschinen erhöht. Durch die Verwendung günstigerer Eisenlegierungen im magnetisch weniger belasteten Joch werden Kosten gespart.

Eine weitere Ausführungsform sieht vor, dass der Suspension Sinterhilfsmittel beigemischt werden, welche eine Phosphorverbindung und/oder eine Borverbindung enthalten. Derartige Sinterhilfsmittel sind beispielsweise Eisenphosphide und/oder Eisenboride. Diese sind im beschriebenen Sinterverfahren besonders gut zur Ausbildung von Eutektika geeignet, wodurch Lunker und Poren weitgehend vermieden werden und, insbesondere bei einem drucklosen Sinterprozess, eine hohe Dichte erreicht wird.

Eine weitere Ausführungsform sieht vor, dass der Suspension Sinterhilfsmittel beigemischt werden, welche in den gesinterten ersten Materiallagen und/oder zweiten Materiallagen einen Gewichtsanteil im Bereich von 0,4 % bis 1 % aufweisen. Durch einen derartigen Anteil an Sinterhilfsmitteln konnten im beschriebenen Sinterprozess besonders gute Ergebnisse hinsichtlich der Vermeidung von Lunkern und Poren erzielt werden.

Eine weitere Ausführungsform sieht vor, dass vor dem Fügen ein Einsetzen von Spulen, insbesondere Zahnspulen, in die Zahnanordnung erfolgt, wobei die Spulen mit der Zahnanordnung vergossen werden. Auf diese Weise ist das Fügen auch bei einer Verwendung von verhältnismäßig schmalen Zähnen kostengünstig und einfach realisierbar.

Eine weitere Ausführungsform sieht vor, dass das Fügen des Jochs mit der Zahnanordnung durch Verpressen erfolgt. Das Fügen durch Verpressen ist kostengünstig, zuverlässig und einfach zu realisieren.

Eine weitere Ausführungsform sieht vor, dass das Entfernen des Innenrings mittels eines spanenden oder mittels eines laserbasierten Verfahrens erfolgt. Ein spanendes Verfahren, z.B. Fräsen, ist kostengünstig, zuverlässig und einfach zu realisieren. Durch ein laserbasiertes Verfahren werden, insbesondere bei gesinterten Blechen, Späne vermieden, die Kurzschlüsse im Stator verursachen können, sodass durch ein laserbasiertes Verfahren die Zuverlässigkeit erhöht wird.

Es zeigen:
- FIG 1: eine schematische Längsschnittdarstellung einer Zahnanordnung,
- FIG 2: eine schematische Darstellung eines ersten Verfahrens zum Herstellen eines Stators,
- FIG 3: eine schematische Darstellung eines zweiten Verfahrens zum Herstellen eines Stators,
- FIG 4: eine schematische Querschnittsdarstellung eines Stators und
- FIG 5: einen schematische Längsschnittdarstellung einer elektrischen rotierenden Maschine.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Gleiche Bezugszeichen haben in den verschiedenen Figuren die gleiche Bedeutung.

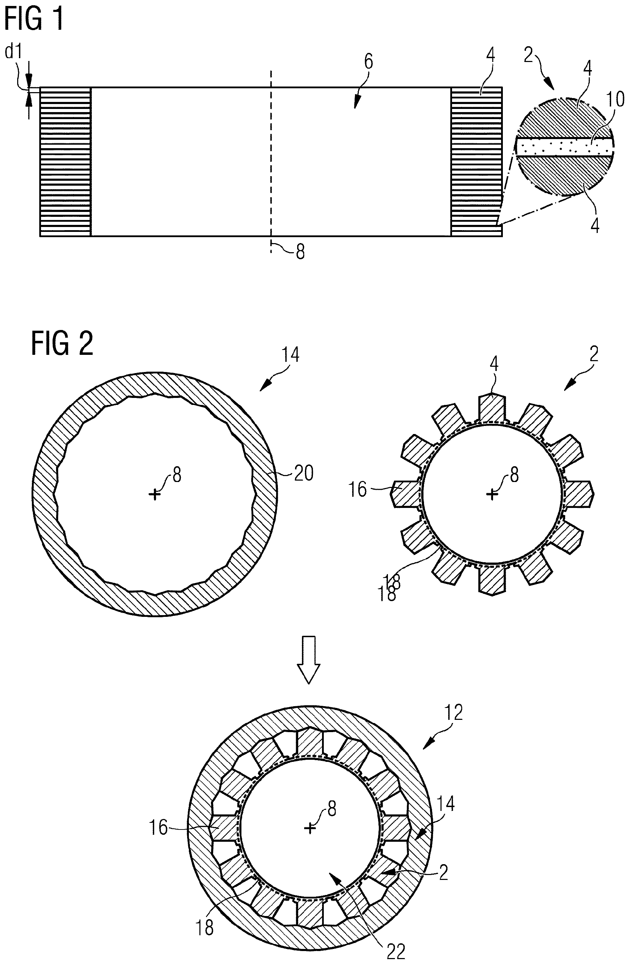

FIG 1 eine schematische Längsschnittdarstellung einer Zahnanordnung 2, welche aus gestapelten ersten Materiallagen 4 hergestellt ist und eine mittig angeordnete Aussparung 6 umfasst, durch welche eine Rotationsachse 8 verläuft. Die Zahnanordnung 2 kann für einen Stator oder einen Rotor einer elektrischen rotierenden Maschine konfiguriert sein. Ist die Zahnanordnung 2 für die Anwendung in einem Stator konfiguriert, ist die Aussparung 6 zur Aufnahme eines Rotors vorgesehen. Ist die Zahnanordnung 2 für die Anwendung in einem Rotor konfiguriert, ist die Aussparung 6 zur späteren Anbindung an eine Welle vorgesehen.

Die ersten Materiallagen 4 weisen jeweils eine erste Dicke d1 im Bereich von 10 µm bis 250 µm, insbesondere im Bereich von 10 µm bis 100 µm, auf und sind jeweils aus einem Grünkörper mittels eines drucklosen Sinterverfahrens hergestellt. Ein derartiger Grünkörper zum Erhalt einer ersten Materiallage 4 wird aus einer Suspension, welche Legierungsfestteilchen, insbesondere pulverförmige, Sinterhilfsmittel und zumindest einen Binder umfasst, mittels eines additiven Verfahrens hergestellt. Derartige additive Verfahren können unter anderem Siebdruck, Schablonendruck und Rollendruck sein. Der Binder, welcher als flüssiger Klebstoff fungiert, kann beispielsweise ein organischer Binder sein, der vor dem Sintern oder während des Sintervorgangs entfernt wird. Insbesondere liegt die Suspension als Paste vor.

Für den Grünkörper der ersten Materiallagen 4 werden Legierungsfestteilchen, die Eisen und Kobalt enthalten, zum Erhalt einer Eisen-Kobalt-Legierung verwendet. Vorzugsweise enthält die Legierung Kobalt mit einem Gewichtsanteil im Bereich von 47 % bis 50 %. Der Suspension werden pulverförmige Sinterhilfsmittel beigemischt, welche eine Phosphorverbindungen, z.B. Eisenphosphide, und/oder Borverbindungen, z.B. Eisenboride, enthalten. In den gesinterten ersten Materiallagen 4 weisen die Sinterhilfsmittel einen Gewichtsanteil im Bereich von 0,4 % bis 1 % auf. Die Sinterhilfsmittel bilden mit den zu sinternden Legierungen Eutektika aus, wodurch Lunker und Poren weitgehend vermieden werden, sodass beim drucklosen Sinterprozess eine hohe Dichte erreicht wird.

Die gestapelten ersten Materiallagen 4 weisen auf beispielhaft einer Lagenseite eine Isolationsschicht 10 auf, welche beispielsweise einen Lack, insbesondere Backlack, enthält. Zusätzlich oder alternativ kann die Isolationsschicht 10 ein Metalloxid, beispielsweise ein Eisenoxid oder Aluminiumoxid, enthalten.

FIG 2 zeigt eine schematische Darstellung eines ersten Verfahrens zum Herstellen eines Stators 12, welcher in einer elektrischen rotierenden Maschine einsetzbar ist. Der Stator 12 umfasst ein, beispielhaft ringförmiges, Joch 14 und die in FIG 1 beschriebene Zahnanordnung 2. Die Zahnanordnung 2, welche aus gestapelten ersten Materiallagen 4, die aus einer Eisen-Kobalt-Legierung hergestellt werden, aufgebaut wird, weist eine Mehrzahl radial ausgerichteter Zähne 16 und einen Innenring 18, welcher die Zähne 16 verbindet, auf. Das Joch 14 wird durch Stapeln von zweiten Materiallagen 20, welche aus einem ersten metallischen Werkstoff hergestellt werden, aufgebaut. Die zweiten Materiallagen 20 sind aus Reineisen hergestellt und weisen Eisen mit einen Gewichtsanteil von mindestens 97 % auf. Somit werden die ersten Materiallagen 4 aus einem Werkstoff hergestellt, der eine höherer Sättigungsinduktion aufweist als der Werkstoff, aus dem die zweiten Materiallagen 20 hergestellt sind. Ferner weisen die ersten Materiallagen 4 eine geringere Lagendicke auf als die zweiten Materiallagen 20.

Die aus Reineisen hergestellten zweiten Materiallagen 20 können unter anderem als Elektrobleche ausgeführt sein, die insbesondere durch Stanzpaketieren gefügt werden. Alternativ können die zweiten Materiallagen 20, analog zu den ersten Materiallagen 4, durch, insbesondere druckloses, Sintern hergestellt werden. Ein zu sinternder Grünkörper zum Erhalt einer zweiten Materiallage 20 wird ebenfalls aus einer Suspension, welche Legierungsfestteilchen, insbesondere pulverförmige, Sinterhilfsmittel und zumindest einen Binder umfasst, mittels des additiven Verfahrens hergestellt. Die Legierungsfestteilchen zur Herstellung einer zweiten Materiallage 20 sind Eisenpartikel. Der Suspension zur Herstellung einer zweiten Materiallage 20 werden pulverförmige Sinterhilfsmittel beigemischt, welche eine Phosphorverbindungen, z.B. Eisenphosphide, und/oder Borverbindungen, z.B. Eisenboride, enthalten. In den gesinterten zweiten Materiallage 20 weisen die Sinterhilfsmittel einen Gewichtsanteil im Bereich von 0,4 % bis 1 % auf.

In einem weiteren Schritt folgt ein Fügen des Jochs 14 mit der Zahnanordnung 2 zu einem Materiallagengefüge 22. Das Fügen des Jochs 14 mit der Zahnanordnung 2 erfolgt beispielsweise durch Verpressen. Daraufhin erfolgt ein Entfernen des Innenrings 18 mittels eines spanenden oder mittels eines laserbasierten Verfahrens. Eine Statorwicklung mit Spulen, insbesondere Zahnspulen, kann vor oder nach dem Entfernen des Innenrings 18 eingesetzt werden. Nach dem Einsetzen der Spulen kann die Anordnung durch Vergießen fixiert werden. Bei einer in der Zahnanordnung 2 vergossenen Wicklung kann der Innenring 18 durch Erodieren entfernt werden, da die Wicklung kein Wasser mehr aufnehmen kann. Die weitere Ausgestaltung der Zahnanordnung 2 in FIG 2 entspricht der in FIG 1.

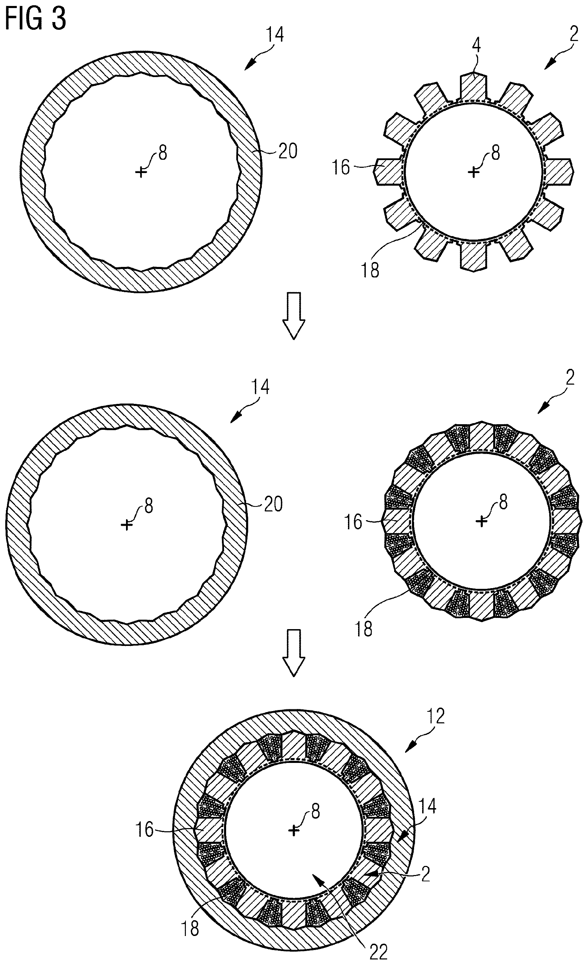

FIG 3 zeigt eine schematische Darstellung eines zweiten Verfahrens zum Herstellen eines Stators 12, wobei vor dem Fügen des Jochs 14 mit der Zahnanordnung 2 ein Einsetzen von Spulen 24 in die Zahnanordnung 2 erfolgt. Die Spulen 24 sind als Zahnspulen ausgeführt und werden nach dem Einsetzen durch Vergießen mit der Zahnanordnung 2 fixiert. Die weitere Ausgestaltung des Stators 12 in FIG 3 entspricht der in FIG 2.

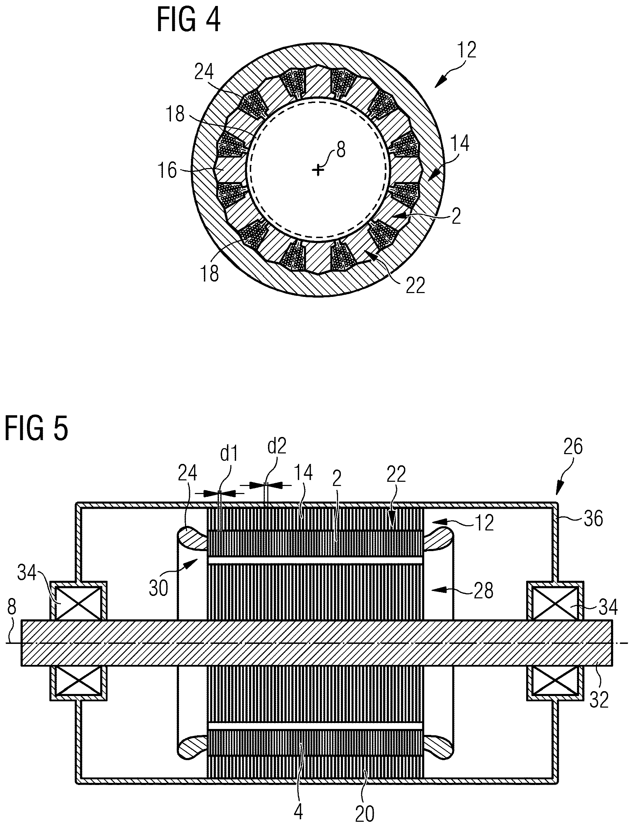

FIG 4 zeigt eine schematische Querschnittsdarstellung eines Stators 12. Die Zähne 16 sind aus einer Eisen-Kobalt-Legierung hergestellt, während das Joch aus Reineisen hergestellt ist. Ferner ist der Stator 12 nach dem in FIG 3 beschriebenen Verfahren hergestellt.

FIG 5 zeigt einen schematische Längsschnittdarstellung einer elektrischen rotierenden Maschine 26, welche beispielhaft als Synchronmaschine ausgeführt ist. Die Synchronmaschine weist einen um eine Rotationsachse 8 rotierbaren Rotor 28 und einen den Rotor 28 umgebenden Stator 12 auf. Zwischen dem Rotor 28 und dem Stator 12 befindet sich ein Spalt 30, der insbesondere als Luftspalt ausgeführt ist. Der Rotor 28 umfasst eine Welle 32, die über Lager 34 gelagert ist. Der Rotor 28 und der Stator 12 sind beispielhaft in einem Gehäuse 36 untergebracht. Der Stator 12 umfasst ein Materiallagengefüge 22 mit einer Zahnanordnung 2 und einem Joch 14. Die Zahnanordnung 2 weist erste Materiallagen 4 und das Joch 14 weist zweite Materiallagen 20 auf, wobei die ersten Materiallagen 4 der Zahnanordnung 2 eine erste Dicke d1 und die zweiten Materiallagen 20 des Jochs 14 eine zweite Dicke d2, welche größer als die erste Dicke d1 ist, aufweisen. Die weitere Ausgestaltung des Stators 12 in FIG 5 entspricht der in FIG 4.

Zusammenfassend betrifft die Erfindung einen Stator 12 für eine elektrische rotierende Maschine 26. Um Kosten zu sparen und eine verbesserte Ökobilanz zu erreichen, werden folgende Schritte vorgeschlagen: Stapeln erster Materiallagen 4, welche aus einem ersten metallischen Werkstoff hergestellt werden, zu einer Zahnanordnung 2, welche einer Mehrzahl radial ausgerichteter Zähne 16 und einen Innenring 18, welcher die Zähne 16 verbindet, umfasst, Stapeln zweiter Materiallagen 20, welche aus einem zweiten metallischen Werkstoff hergestellt werden, zu einem Joch 14, wobei der erste metallische Werkstoff eine höhere Sättigungsinduktion aufweist als der zweite metallischen Werkstoff, Fügen des Jochs 14 mit der Zahnanordnung 2 zu einem Materiallagengefüge 22, Entfernen des Innenrings 18 wobei die ersten Materiallagen 4 jeweils eine erste Dicke d1 im Bereich von 10 µm bis 250 µm, insbesondere im Bereich von 10 µm bis 100 µm, aufweisen und jeweils aus einem Grünkörper mittels eines, insbesondere drucklosen, Sinterverfahrens hergestellt werden.

## Patentansprüche

1. Verfahren zum Herstellen eines Stators (12) für eine elektrische rotierende Maschine (26) umfassend folgende Schritte:
- Stapeln erster Materiallagen (4), welche aus einem ersten metallischen Werkstoff hergestellt werden, zu einer Zahnanordnung (2), welche einer Mehrzahl radial ausgerichteter Zähne (16) und einen Innenring (18), welcher die Zähne (16) verbindet, umfasst,
- Stapeln zweiter Materiallagen (20), welche aus einem zweiten metallischen Werkstoff hergestellt werden, zu einem Joch (14),
wobei der erste metallische Werkstoff eine höhere Sättigungsinduktion aufweist als der zweite metallischen Werkstoff,
- Fügen des Jochs (14) mit der Zahnanordnung (2) zu einem Materiallagengefüge (22),
- Entfernen des Innenrings (18)
wobei die ersten Materiallagen (4) jeweils eine erste Dicke (d1) im Bereich von 10 µm bis 250 µm, insbesondere im Bereich von 10 µm bis 100 µm, aufweisen und
jeweils aus einem Grünkörper mittels eines, insbesondere drucklosen, Sinterverfahrens hergestellt werden.

2. Verfahren nach Anspruch 1,
wobei die zweiten Materiallagen (20) jeweils mit einer zweiten Dicke (d2), welche größer als die erste Dicke (d1) der ersten Materiallagen (4) ist, hergestellt werden.

3. Verfahren nach einem der Ansprüche 1 oder 2,
wobei die zweiten Materiallagen (20) als Elektrobleche ausgeführt sind, welche durch ein Stanzverfahren oder ein Laserschneidverfahren hergestellt werden.

4. Verfahren nach einem der Ansprüche 1 oder 2,
wobei die zweiten Materiallagen (20) aus einem Grünkörper mittels eines, insbesondere drucklosen, Sinterverfahrens hergestellt werden.

5. Verfahren nach einem der vorherigen Ansprüche,
wobei der Grünkörper zur Herstellung der ersten Materiallagen (4) und/oder der zweiten Materiallagen (20) aus einer Suspension, welche Legierungsfestteilchen, insbesondere pulverförmige, Sinterhilfsmittel und zumindest einen Binder umfasst, hergestellt wird,
wobei mittels der, insbesondere pulverförmigen, Sinterhilfsmittel Eutektika ausgebildet werden.

6. Verfahren nach Anspruch 5,
wobei für den Grünkörper der ersten Materiallagen (4) Legierungsfestteilchen verwendet werden, die Eisen und Kobalt enthalten und
wobei die zweiten Materiallagen (20) aus Reineisen oder einer Eisenlegierung mit einer Sättigungsinduktionen von weniger als 2,2 T hergestellt werden.

7. Verfahren nach einem der Ansprüche 5 oder 6,
wobei der Suspension Sinterhilfsmittel beigemischt werden, welche eine Phosphorverbindung und/oder eine Borverbindung enthalten.

8. Verfahren nach einem der Ansprüche 5 bis 7,
wobei der Suspension Sinterhilfsmittel beigemischt werden, welche in den gesinterten ersten Materiallagen (4) und/oder zweiten Materiallagen (20) einen Gewichtsanteil im Bereich von 0,4 % bis 1 % aufweisen.

9. Verfahren nach einem der vorherigen Ansprüche,
wobei vor dem Fügen ein Einsetzen von Spulen (24), insbesondere Zahnspulen, in die Zahnanordnung (2) erfolgt,
wobei die Spulen (24) mit der Zahnanordnung (2) vergossen werden.

10. Verfahren nach einem der vorherigen Ansprüche,
wobei das Fügen des Jochs (14) mit der Zahnanordnung (2) durch Verpressen erfolgt.

11. Verfahren nach einem der vorherigen Ansprüche,
wobei das Entfernen des Innenrings (18) mittels eines spanenden oder mittels eines laserbasierten Verfahrens erfolgt.

12. Stator (12) für eine elektrische rotierende Maschine (26) umfassend
- eine Zahnanordnung (2),
welche eine Mehrzahl radial ausgerichteter Zähne (16) aufweist und
welche aus gestapelten ersten Materiallagen (4) aus einem ersten metallischen Werkstoff hergestellt ist,
- ein Joch (14),
welches aus gestapelten zweiten Materiallagen (20) aus einem zweiten metallischen Werkstoff hergestellt ist, wobei der erste metallische Werkstoff eine höherer Sättigungsinduktion aufweist als der zweite metallischen Werkstoff,
wobei das Joch (14) mit der Zahnanordnung (2) zu einem Materiallagengefüge (22) gefügt ist,
wobei die ersten Materiallagen (4) jeweils eine erste Dicke (d1) im Bereich von 10 µm bis 250 µm, insbesondere im Bereich von 10 µm bis 100 µm, aufweisen und
jeweils aus einem Grünkörper mittels eines, insbesondere drucklosen, Sinterverfahrens hergestellt sind.

13. Stator (12) nach Anspruch 12,
wobei die zweiten Materiallagen (20) jeweils eine zweite Dicke (d2) aufweisen, welche größer als die erste Dicke (d1) der ersten Materiallagen (4) ist.

14. Stator (12) nach einem der Ansprüche 12 oder 13,
wobei die zweiten Materiallagen (20) als Elektrobleche ausgeführt sind, welche durch ein Stanzverfahren oder ein Laserschneidverfahren hergestellt sind.

15. Stator (12) nach einem der Ansprüche 12 oder 13,
wobei die zweiten Materiallagen (20) aus einem Grünkörper mittels eines, insbesondere drucklosen, Sinterverfahrens hergestellt sind.

16. Stator (12) nach einem der Ansprüche 12 bis 15,
wobei die ersten Materiallagen (4) aus einer Eisen-Kobalt-Legierung und die zweiten Materiallagen (20) aus Reineisen oder einer Eisenlegierung mit einer Sättigungsinduktionen von weniger als 2,2 T hergestellt sind.

17. Elektrische rotierende Maschine (26) mit mindestens einem Stator (12) nach einem der Ansprüche 12 bis 16.
